# EUROPEAN PATENT APPLICATION

(11) **EP 4 184 006 A1**
(43) Date of publication of application: **24.05.2023**
(21) Application number: 21209170.6
(22) Date of filing: 19.11.2021
(51) Int. Cl.: F03D 13/10, F03D 13/20, F03D 13/25

(54) **METHOD FOR THE ARRANGEMENT OF AT LEAST ONE COMPONENT DURING THE INSTALLATION OF A WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

Method for the arrangement of at least one component (9) during the installation of a wind turbine (1), wherein the component (9) is releasably attached to a tower segment (2) prior to a coupling of the tower segment (2) to a tower segment support structure (3), wherein the tower segment (2) forms at least a section of a tower of the wind turbine (1) to be installed and wherein the component (9) is attached to an attachment area (13, 21) at the outer surface (12) of the tower segment (2), wherein the component (9) is moved from the attachment area (13) to an arrangement position (15, 30) after coupling of the tower segment (2) to the tower segment support structure (3).

## Description

The invention relates to a method for the arrangement of at least one component during the installation of a wind turbine.

During the installation of a wind turbine, not only the major components of the wind turbine, like the tower, the nacelle, the hub and the rotor blades, have to be installed, but also secondary equipment has to be transported to and arranged at the wind turbine. Such equipment may be commonly referred to as "secondary steel" and may include different components and devices, depending on the intended use of the wind turbine to be installed.

Normally, such secondary components are installed to the wind turbine, in particular to the wind turbine tower, during the installation of the wind turbine and after the tower has been erected. Therefore, larger components have to be installed using a crane, which lifts each individual component to the wind turbine, for instance from a vessel in case of an offshore wind turbine or from another type of vehicle or storage location in case of an onshore wind turbine. However, the individual lifting of the components is very time consuming and may increase the required weather window for the wind turbine installation, in particular for the installation of offshore wind turbines. Therefore, there is a need for an efficient method which allows for arranging such components during the installation of a wind turbine.

The invention is based on the objective problem to provide an improved method for the arrangement of at least one component during the installation of a wind turbine, which in particular reduces the amount of time required for the installation of the wind turbine, or for the arrangement of the components during the installation, respectively.

According to the invention, this object is solved by a method as initially described, wherein the component is releasably attached to a tower segment prior to a coupling of the tower segment to a tower segment support structure, wherein the tower segment forms at least a section of a tower of the wind turbine to be installed and wherein the component is attached to an attachment area at the outer surface of the tower segment, wherein the component is moved from the attachment area to an arrangement position after coupling of the tower segment to the tower segment support structure.

The coupling of the at least one component to a tower segment has the advantage that the component can be moved together with the tower segment, so that in particular only a single lifting step is required for lifting the tower segment and one or more components attached thereto. After attaching the tower segment to the previously installed tower segment support structure, the components can be moved from the attachment area, in which they are attached to the outer surface of the tower segment, to the desired arrangement position.

The arrangement of one or more components around the outer circumference of the tower segment has the advantage that the component can be attached to the tower segment prior to the lifting of the tower segment to the respective tower segment support structure. In particular, a pre-installation of the component becomes possible, so that the component does not have to be attached to the tower segment at the installation side of the wind turbine. Therefore, the attachment of the components can be done without affecting the on-site installation time, or the required weather window for installation of the wind turbine, respectively. In particular for offshore wind turbines, an onshore preassembly of the tower segment and the attached component becomes possible. However, also for onshore wind turbines, a preassembly of the components and the tower segments may be used for facilitating and speeding up the installation. Advantageously, the reduced installation time reduces also the cost of the wind turbine installation.

Furthermore, the preassembly offers the advantage that the components and the tower segment can be handled simultaneously during transportation. Therefore, the space required on a transportation vehicle like a vessel used for the installation of offshore wind turbines can be reduced.

The tower segment support structure may be for instance an onshore or offshore wind turbine foundation, which is installed at the position of the wind turbine to be installed prior to the coupling of the tower segment to the tower segment support structure. The attachment of the tower segment to the tower support structure may occur for instance by bolting, welding and/or the usage of one or more slip joints between the tower segment and the tower segment support structure.

The tower segment, to which the components are attached, may form the entire tower of the wind turbine, or a section of a tower that comprises two or more tower segments, respectively. Preferably, a tower segment forming the entire tower of the wind turbine is used. The tower segment may be in particular a full tower of the wind turbine if the crane capacity available at the installation side allows to lift such a large weight. In the alternative, it may be a tower segment connected with at least one additional tower segment for forming the full tower of the wind turbine. In the latter case, at least one component may be attached to one or more of the tower segments forming the tower of the wind turbine.

The at least one component is attached to the outer surface of the tower segment, which may comprise for instance a cylindrical or tubular shape. It is also possible that the tower segment has the shape of a frustum of a cone, or of a truncated cone, respectively.

The at least one component is attached to the attachment area at the outer surface of the tower segment. After the attachment of the tower segment to the tower segment support structure, the component is moved from the attachment area to the arrangement position. The arrangement position may be for instance at the tower segment, the tower segment support structure and/or at a nacelle of the wind turbine. Hence, the component may be lifted or lowered from the attachment area to the arrangement position.

The arrangement position may be the position, in which the component is used during the operation of the wind turbine, or an intermediate position, in which the component is temporarily arranged before being moved to a final position, for example a final position in the interior of a hollow tower segment or a hollow tower segment support structure.

Hence, the component does not remain in the attachment area, in which it is arranged during the lifting of the tower segment to the tower segment support structure. The transport of the component to the wind turbine to be installed occurs by arranging the component in the attachment area at the outer surface of the tower segment only during the lifting procedure and not during the final operation of the wind turbine.

The attachment of the component to the tower segment allows for omitting the usage of a transition piece arranged in between the tower segment support structure and the tower segment. Hence, no transition piece or any other intermediate structure between the tower segment support structure and a tower segment, in particular a tower segment forming the entire tower of the wind turbine, is required for carrying the components during the installation procedure. Advantageously, a direct attachment of the tower segment to the tower segment support structure reduces the costs for the installation of the wind turbine, in particular for offshore wind turbines.

In a preferred embodiment, the component is releasably attached to the tower segment by at least one attachment means, wherein the attachment means is attached permanently or temporarily to the tower segment. Using an attachment means allows for attaching the at least one component to the outer surface of the tower segment, which may be in particular the jacket of a cylinder or of a frustum of a cone, respectively, and hence exhibit a curved shape in the attachment area, to which the at least one component is attached.

The attachment means may be fixated permanently to the tower segment and in particular remain on the outer surface of the tower segment after the component has been moved to the arrangement position. Alternatively, one or more temporarily fixated attachment means may be used, so that the attachment means may be removed from the tower segment at the same time or after moving the at least one component to the arrangement position. It is possible that a combination of one or more permanently attached attachment means and one or more temporarily attached attachment means is used for attaching a component to the tower segment.

Preferably, the attachment means and/or a corresponding attachment portion of the component coupled to the attachment means in the attached state of the component is remotely releasable. The usage of an attachment means and/or a corresponding attachment portion which are remotely releasable has the advantage that the component can be released from the tower segment without the need for manual work and hence without the need for the presence of a worker in the attachment area.

The connection between the component and the tower segment may be released using a releasing means, for instance a control device, which may be connected by a wire or wirelessly to the attachment means, or the corresponding attachment portion of the component, respectively. For instance, this allows to release the component for instance from a vessel or any other remote position.

In a preferred embodiment, an attachment structure welded to the tower segment is used as permanently attached attachment means and/or an attachment device, which is releasably coupled to the tower circumference or to a face side of the tower segment and which comprises one or more attachment structures, is used as temporarily attached attachment means. The attachment structure welded to the tower, or provided as a part of the temporarily attached attachment means, respectively, are in particular adapted to couple to the component to be attached. Also a coupling to a housing of a component to be attached and/or a supporting of a component coupled to the attachment structure may be possible.

The attachment structure may comprise for instance the shape of a hook or the like, to which a component can be attached. Also other types of attachment structures may be possible. The attachment structures may be adapted for locking a component attached to them. In particular, also an automatic release of the component can be possible, so that the fixation of the component to the attachment means in the attachment area on the tower segment may be automatically released prior to the movement of the component to the arrangement position. This has the advantage that the amount of manual work for the positioning of the component may be reduced. In particular, this enables a remote control of the movement of the components from the attachment area to the arrangement position. Advantageously, this allows to omit human interaction with the components and therefore to securely arrange the components in the attachment position.

The usage of a permanently attached attachment means like an attachment structure welded to the tower segment has the advantage that the attachment means does not have to be removed from the tower segment after installation of the wind turbine. The usage of a temporarily attached attachment device releasably fixated to the tower segment has the advantage, that no welding to the outer tower surface has to be conducted, since such welding procedures may affect the stability of the tower segment in an unwanted manner.

An attachment device, which is releasably coupled to the outer circumference of the tower segment, may be removed after moving the components from the attachment area at the segment to the corresponding arrangement position of the component. The attachment device may be releasably attached to the outer circumference of the tower segment or to one of the face sides of the tower, hence to an upper or lower end of the tower segment.

Preferably, a belt arranged around the outer circumference of the tower segment, a ring-shaped attachment device arranged around the outer circumference of the tower segment, a flange attached to an upper or lower face side of the tower segment, and/or a magnetic means is used as attachment device.

A belt, which is arranged around the outer circumference of the tower may be used both with a cylindrical tower segment and with a tower segment that has the shape of a cone section. The belt may comprise a plurality of attachment structures, to which one or more of the components may be coupled.

A ring-shaped attachment device may be used in particular with a tower segment that has the shape of a cone segment, since in this case the ring-shaped attachment device may be hold in position by the increasing diameter of the tower segment at the lower end, or the end which is attached to the tower segment support structure, respectively. The attachment of the ring-shaped attachment device to the tower segment is comparable to the attachment of a washer on a cone, or on a rod with a linearly changing diameter, respectively.

Also the ring-shaped attachment device may comprise a plurality of attachment structures, to which one or more of the components may be coupled. Advantageously, the ring-shaped attachment device may be easily removed by lifting it from the installed tower segment, in particular prior to an arrangement of the nacelle. Alternatively, the ring-shaped attachment device may comprise two or more releasably attached ring segments which allow for disassembling the attachment device.

A flange comprising one or more attachment structures may be attached to the lower end or the upper end of the tower segment. The flange may be used for instance to couple the tower segment to the tower segment support structure, or to the nacelle of the wind turbine, respectively. The flange may be for instance an L-flange or a T-flange, which at least sectionally protrudes from the outer surface of the tower segment, wherein in the protruding section of the flange, one or more attachment structures allowing the attachment of the at least one component may be provided.

A magnetic means may be used in particular for attaching smaller and/or lighter components to the tower segment. Larger components and/or components with a higher mass may be attached with one of the other aforementioned attachment means. The magnetic means may also comprise one or more attachment structures for coupling the magnetic means to a component. The tower segment may consist in particular at least partly of steel so that the magnetic means may be magnetically coupled to the tower segment.

In a preferred embodiment, an attachment device, which is adaptable to different tower segment diameters, is used. This allows for reusing the attachment device for different installation procedures and/or for attaching one or more similar attachment means at different positions along the length of the tower segment.

Preferably, an attachment device comprising at least one protective segment is used, wherein the protective segment is in direct contact with the tower segment in the coupled state of the attachment device. The usage of the protective segment protects the outer circumference of the tower segment during the arrangement and/or the removal of the attachment means and/or during lifting of the tower segment. Depending on the type of attachment means used, the protective segment may be for instance arranged on one side of a belt, around a central orifice of a ring-shaped attachment device and/or at a contacting area of a flange abutting the tower segment after attachment.

In a preferred embodiment, the protective segment comprises at least one layer of a soft material. As soft material, for instance neoprene may be used. This protects for instance a coating of the tower segment like a paint layer from damage during the installation.

Preferably, a foundation of an offshore wind turbine is used as tower segment support structure. This has the advantage that components, which are arranged at an arrangement position at the offshore wind turbine foundation, do not have to be arranged together with the foundation during its installation. This significantly facilitates the arrangement and the attachment of the foundation in the sea, or on the sea bed, respectively. The foundation may be any type of offshore foundation like a monopile foundation, a jacket-type foundation, a gravity-based foundation, a floating foundation or a similar type of foundation.

In a preferred embodiment, an arrangement position on a platform arrangement attached to the tower segment support structure, in particular to the outer circumference of an at least sectionally cylindrical tower segment support structure, an arrangement position at the outer circumference of the tower segment support structure, and/or an arrangement position at a flange between the tower segment and the tower segment support structure is used.

The components, which are arranged in the attachment area after coupling the tower segment to the tower segment support structure, may then be moved from the attachment area in downward direction to the arrangement position at the tower segment support structure. By providing a platform arrangement with the respective arrangement position for the at least one component, the component can be lowered from the outer surface of the tower segment to the platform arrangement, so that the components may be arranged in their arrangement position on the platforms around the outer circumference of the tower segment support structure.

In addition to the platform arrangement or as an alternative, also a direct attachment of the components to the outer circumference of the tower segment support structure is possible. In particular, the tower segment support structure may also comprise a cylindrical or tubular shape, or the shape of a cone frustum, respectively.

In an embodiment, a platform arrangement comprising one or more platforms arranged around the outer circumference of the tower segment support structure is used, wherein at least one of the platforms comprises an opening and/or a hatch through which the component is moved to the arrangement position.

In particular when a plurality of platforms is arranged adjacently around the entire circumference of the tower segment support structure, an opening and/or a hatch in one of the platforms allows for lowering a component to an attachment position underneath the platform. This allows for installing both components on the platforms of the platform arrangement and underneath the platform arrangement. The components arranged underneath the platform may be attached for instance to the outer surface of the tower segment support structure. Preferably, the component is moved from the attachment area to the arrangement position using a lifting arrangement, in particular a crane attached to the nacelle, a crane arranged on a vessel and/or a crane arranged in the vicinity of the tower segment support structure. If a crane attached to the nacelle of the wind turbine is used, the movement of the components from the attachment area to the arrangement position may occur after the nacelle of the wind turbine has been arranged on the top side of the tower. The crane attached to the nacelle may comprise a winch system that is attached to a section of the nacelle protruding from the outer circumference of the tower.

Advantageously, the crane attached to the nacelle may be moved in circumferential direction of the tower segment by rotating the nacelle on the tower. Also a radial movement is easily realizable using a crane attached to the nacelle. This allows for a lateral adjustment of the component position during lowering and/or for moving the component laterally prior and/or during its lowering into the attachment position.

When a crane is used that is arranged in the vicinity of the tower segment support structure, or of the wind turbine to be installed, respectively, a movement of the component to the arrangement position prior to the mounting of the nacelle is also possible. As a crane, for instance a crane on a vessel may be used for the installation of offshore turbines. In case of onshore turbines, for example a crane arranged on a land vehicle or a stationary crane erected in the vicinity of the wind turbine may be used.

Preferably, at least one guiding means attached to the tower segment and/or to the tower segment support structure is used during the movement of the component to the arrangement position. The guiding means may comprise for instance one or more sections which are adapted to the shape of the component attached to the tower segment so that a guiding of the component during the lowering to the arrangement position becomes possible. This facilitates an arrangement and/or an attachment of the component to a structure of the wind turbine to be installed after the arrangement of the component in the arrangement position.

Preferably, the component comprises a container-shaped housing or that the component is arranged inside a container. The component may be arranged in particular in a standard freight container and/or comprises a housing that matches the dimension of a standard freight container, respectively. This facilitates the lifting of the components as well as the transport of the components to the installation site.

In particular for offshore wind turbines, an attachment of a component comprising a container-shaped housing, or which is arranged inside a container, respectively, on a transport and/or installation vessel is facilitated. In addition, also the standard means for lifting containers, locking containers and/or releasing containers after lifting may be used, so that in particular an automatic release of the container after its arrangement in the arrangement position becomes possible. In particular, a container lifting and locking systems comparable to the commercial shipping of containers can be used.

In addition, in particular the usage of a container-shaped housing and/or a container for housing the component may allow for attaching the components in an automatically releasable manner to an attachment means, for instance by using a standard container lifting and locking system known from commercial shipping for fixating the components to the attachment means and/or as part of the attachment structures of the attachment means.

Preferably, the component is a component usable in an electrolysis process, a component usable for energy conduction and/or conversion, a component usable for medium transport, a component to be attached to the outer circumference of the tower segment support structure, and/or a nacelle component.

A component usable in an electrolysis process may be in particular an electrolyzer, a water desalination device, a water purifier, a cooling unit and/or a gas storage device. Such components may be arranged for instance on one or more platforms around the outer circumference of the tower segment support structure and may use electrical energy produced by the wind turbine in an electrolysis process for the generation of hydrogen.

A component usable for energy conduction and/or conversion may be in particular a switch gear device, a transformer, a converter and/or an electric cable arrangement. Such devices may be used for switching and/or converting the electrical energy produced by the wind turbine, for instance prior to a feeding of the electrical energy into a power grid and/or to adapt the electrical energy produced by the wind turbine for the electrolysis process. An electric cable arrangement may be used for connecting the wind turbine to further wind turbines and/or to onshore stations, in particular by connecting the wind turbine to an undersea cable, or a subterranean cable, respectively.

A component usable for medium transport may be in particular a gas pipe, a water pipe and/or a riser pipe. A water pipe or a riser pipe may be used for instance to provide water, in particular sea water, to further components, which are in particular adapted for performing an electrolysis process. A gas pipe may be used to transport gas generated by the electrolysis process in particular to a remote facility and/or storage. A component usable for medium transport may be arranged in particular in an arrangement position at the outer surface of the tower segment support structure, bridging for instance at least the distance between a platform arrangement and a sea surface, or the ground, respectively. However, also an arrangement of a component for medium transport on a platform arrangement of on the tower segment is possible.

A component to be attached to the outer circumference of the tower segment support structure may be for instance a ladder, an access ladder and/or a cathodic protection device like a sacrifice anode. Also components normally attached to a transition piece may be attached in an arrangement position at the outer circumference of the tower segment support structure. Hence, the component may also be a boat landing ladder, a J-tube, a working platform and/or a service platform. Such components may be installed by moving them together with the tower segment to the tower segment support structure in particular when a wind turbine without a transition piece between the tower support structure and the tower segment is installed. Advantageously, the usage of otherwise needed separate transporting procedures like crane lifts can be avoided.

A nacelle component can be a part of the nacelle which is lifted upwards to an arrangement position at the nacelle, for instance prior to or after other parts of the nacelle has been arranged on the top side of the tower.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an offshore wind turbine,
- Fig. 2: the arrangement of a tower segment on a tower segment support structure of a wind turbine illustrating an embodiment of a method according to the invention for the arrangement of at least one component during the installation of a wind turbine,

- Fig. 3: the tower segment attached to the tower segment support structure with a plurality of components in the attachment area,
- Fig. 4: components attached to the outer surface of the tower segment using a first embodiment of an attachment means,
- Fig. 5: components attached to the outer circumference of the tower segment using a second embodiment of an attachment means, and
- Fig. 6: the wind turbine to be installed with the components moved to the arrangement position.

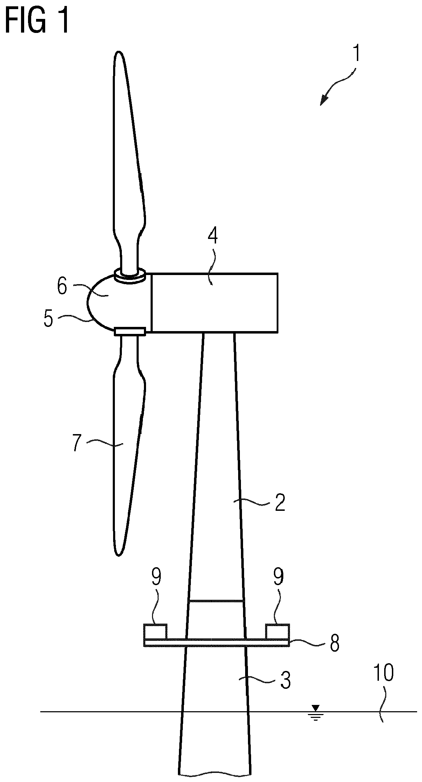

In fig. 1, an embodiment of a wind turbine 1 is shown. The wind turbine 1 is an offshore wind turbine and comprises a tower segment 2, which is attached to a tower segment support structure 3. The tower segment support structure 3 is a monopile foundation of the offshore wind turbine 1. Alternatively, also other types of offshore wind turbine foundations may be used as tower segment support structure 3.

The tower segment 2 forms the entire tower of the wind turbine 1, wherein on the upper end of the tower segment 2, a nacelle 4 is arranged. The nacelle 4 carries a rotor 5 of the wind turbine 1 comprising a hub 6 and a plurality of rotor blades 7.

The tower segment support structure 3 comprises a platform arrangement 8, on which a plurality of components 9 is arranged. The platform arrangement 8 is arranged on the outer circumference of the tower segment support structure 3.

The components 9 may be for instance components used in an electrolysis process, in which electrical energy produced by the wind turbine 1 is used for the generation of hydrogen. Therefore, water from the sea 10 may be used. The components usable in the electrolysis process may be for instance an electrolyzer, a water desalination device, a water purifier, a cooling unit and/or a gas storage device or the like.

During installation of the wind turbine 1, also the components 9 must be arranged on the wind turbine 1, in particular at the platform arrangement 8 provided at the tower segment support structure 3.

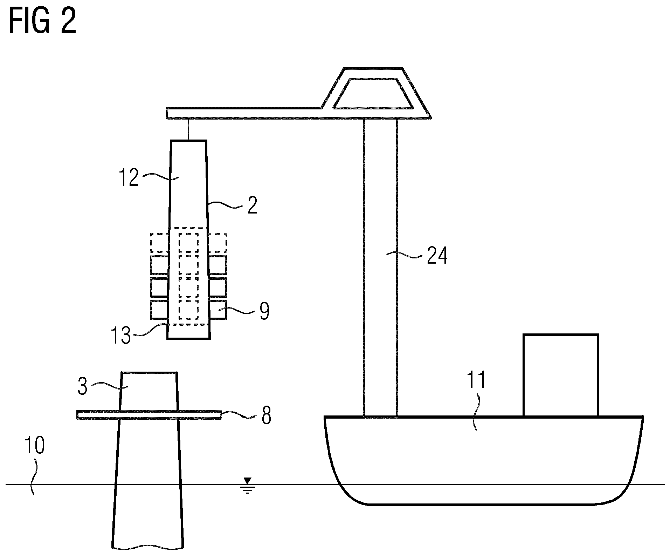

In fig. 2, an embodiment of a method for the arrangement of at least one component 9 during the installation of the wind turbine 1 is depicted. The tower segment 2 is moved from a vessel 11 to the tower segment support structure 3 by a crane 24 of the vessel 11. The crane 24 lifts the tower segment 2 in order to couple the lower end of the tower segment 2 to the tower segment support structure 3 for erecting the wind turbine 1.

One or more components 9 are attached to the outer surface 12 of the tower segment 2. This allows for lifting the tower segment 2 and the components 9 in a single lifting step from the vessel 11 to the tower segment support structure 3. Advantageously, individual lifting steps for the components 9 can be avoided. The components 9 may be coupled with the tower segment 2 for instance on the vessel 11 or at an onshore facility, wherein in the latter case the tower segment 2 may already be loaded on the vessel 11 with the components 9 attached to it.

The components 9 are arranged in an attachment area 13 at the outer surface 12 of the tower segment 2. The components 9 are releasably coupled to the outer circumference of the tower segment 2, so that they may be moved each to their final position at the wind turbine 1.

The components 9 may be arranged in different geometries and/or orientations around the circumference, for instance distributed around the outer circumference of the tower segment 2 and/or along its longitudinal direction, or its height direction, respectively. Examples for additional position of components 9 are shown in dashed lines for illustration.

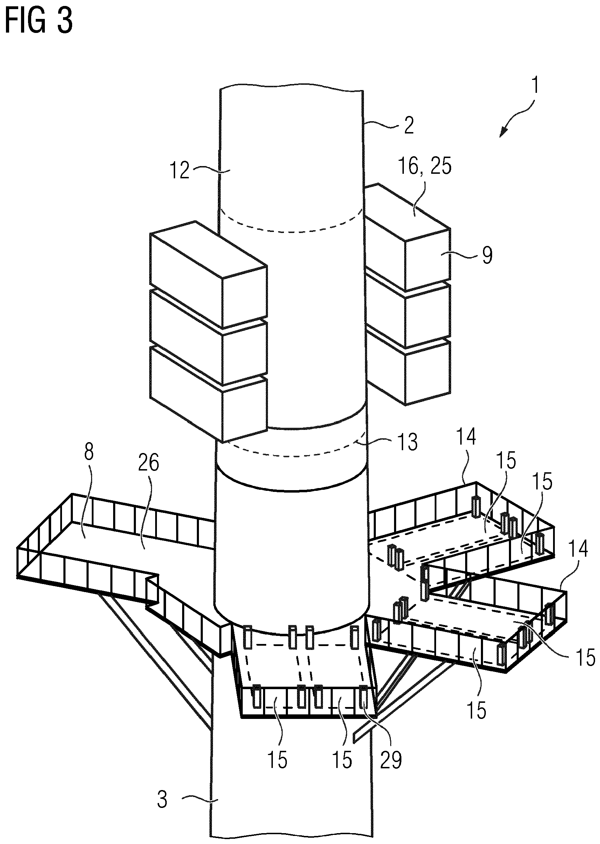

In fig. 3, a perspective view on the wind turbine 1 to be installed is shown. In this situation, the tower segment 2 has been coupled to the tower segment support structure 3.

The tower segment 2 may be attached to the tower segment support structure 3 for instance using bolts, welding and/or a slip joint connection. Also other types of attachments between the tower segment 2 and a tower segment support structure 3 are possible. The tower segment 2 may be in particular directly attached to the tower segment support structure 3, so that intermediate structures like transition pieces or the like may be omitted. After attachment of the tower segment 2 to the tower segment support structure 3, the components 9 are to be moved to their corresponding arrangement positions 14, which may be located for instance on the top surface of the platform arrangement 8.

In this embodiment, the platform arrangement 8 comprises three platforms 14, which each comprise two arrangement positions 15, so that six components 9 can be arranged on the platform arrangement 8. Correspondingly, six components 9 are coupled to the outer surface 12 of the tower segment 2. It is possible that the platform arrangement 8 comprises another number of platforms 14, that each comprise at least one attachment position 15 for a component 9, and/or that the platform arrangement 8 comprises one or more further platforms 26 without attachment positions 15.

Each component 9 is arranged in a container 16, hence each of the components 9 comprises a container-shaped housing 25. As housing for the components 9, in particular a standardized freight container 16 may be used which facilitates loading and/or transport of the components 9, in particular on the vessel 11. In addition, also for the attachment of the components 9 to the tower segment 2, locking means adapted for the fixation of commercially used freight containers may be used to enable an automatic locking and/or unlocking of the containers 16 on the tower segment 2, so that in particular the movement of the components 9 from the attachment area 13 to their respective arrangement position 15 can be conducted automatically and in particular without the need of manual labor for releasing the components 9 from the tower segment 2.

To allow for automatic and/or remotely controlled release of the component 9, the attachment means 17 and/or a corresponding attachment portion of the component 9 coupled to the attachment means 17 in the attached state of the component 9 is remotely releasable. The usage of an attachment means 17 and/or a corresponding attachment portion which are remotely releasable has the advantage that the component 9 can be released from the tower segment 2 without the need for manual work and hence without the need for the presence of a worker in the attachment area 13.

In the arrangement positions 15, locking structures 29 may be provided which allow for securely attaching the components 9, or their container-shaped housing 25, respectively, to the platforms 14.

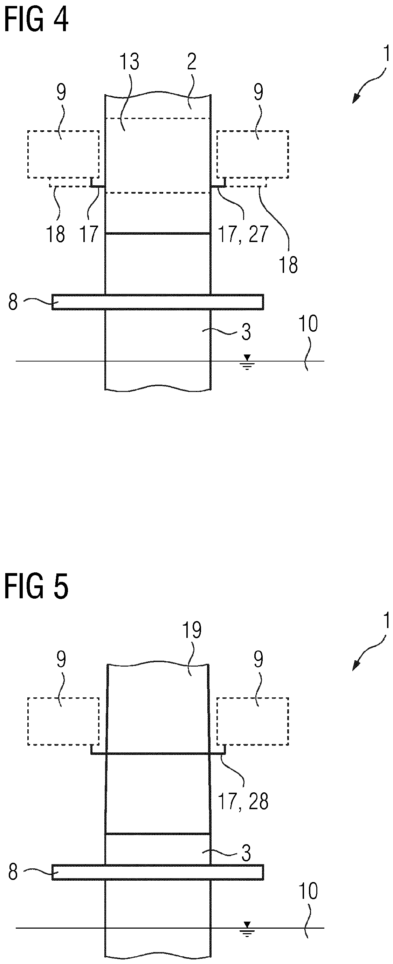

In fig. 4, a first embodiment of an attachment means 17 used for attaching the components 9 to the outer surface 12 of the tower segment 2 is shown. In this embodiment, permanently attached attachment structures 27 are used as attachment means 17. The attachment structures 27 may be welded to the tower segment 2 so that the components 9 can be releasably attached to the attachment structures 27 and therefore to the tower segment 2. The attachment structures 27 may comprise for instance the shape of a hook or the like, to which a component 9 can be attached. Also other types or shapes of attachment structures 27 are possible. The attachment structures 27 may be adapted for locking a component 9 attached to them. Depending on the size of the components 9, or of their containers 16 used as housing, additional support structures 18 may be used to support the containers 16 against the tower segment 2. In addition or alternatively, also temporarily attached attachment means 17 may be used, which can be removed from the tower segment 2 after arranging the tower segment 2 on the tower segment support structure 3.

In fig. 5, a second embodiment of an attachment means 17 is shown. In this embodiment, the attachment means 17 is a ring-shaped attachment device 28, which is arranged around the outer circumference 19 of the tower segment 2. The tower segment 2 may comprise in particular the shape of a section of a cone, which is shown in an exaggerated manner in fig. 5. Hence, the diameter of the tower segment 2 decreases towards the top side of the wind turbine 1, wherein the nacelle is attached. This allows for releasably coupling the ring-shaped attachment device 28 used as attachment means 17 to the tower segment 2 by arranging it at the longitudinal position of the tower segment 2, in which the diameter of the tower segment 2 matches the diameter of a central orifice of the ring-shaped attachment device 28. Hence, the ring-shaped attachment device 28 is fixated in this position during the lifting procedure, in which the lower end of the tower segment 2 is pointing downwards for the fixation to the tower segment support structure 3. The attachment of the ring-shaped attachment device 28 to the tower segment 2 is comparable to a washer, which is arranged with its orifice on a cone so that is cannot slide downwards the cone after reaching an area, which comprises a diameter equal to the diameter of the orifice.

Also the ring-shaped attachment device 28 may comprise a plurality of attachment structures 27 as previously described, to which one or more of the components 9 can be coupled. In addition, also support structures 18 may be provided at the attachment device 28 if required.

After moving the components 9 to the attachment positions 15, the ring-shaped attachment device 28 may be easily removed by lifting it from the installed tower segment 2, in particular prior to an arrangement of the nacelle 4. Alternatively, the ring-shaped attachment device 28 may consist of two or more releasably attached ring segments which allow for disassembling the attachment device 28. This allows for avoiding the connection of attachment structures 27 to the tower segment 2, so that in particular no welding is required.

As an alternative to the ring-shaped attachment device 28, also a belt arranged around the outer circumference of the tower segment 2 providing a plurality of attachment structures 27 as attachment points may be used as temporarily fixated attachment means 17.

In addition or alternatively, also a flange attached to the upper end, hence the nacelle-wise end of the tower segment 2, or to the lower end of the tower segment 2 may be used for attaching the components 9 to the tower segment 2. The flange may be used for instance to couple the tower segment 2 to the tower segment support structure 3, or to the nacelle 4 of the wind turbine 1, respectively. The flange may be for instance an L-flange or a T-flange, which at least sectionally protrudes from the outer surface 12 of the tower segment 2, wherein in the protruding section of the flange, one or more attachment structures 27 allowing the attachment of the at least one component 9 may be provided.

To avoid damage to the outer circumference of the tower segment 2, the attachment device 28 may comprise at least one protective segment (not shown), which is in direct contact with the tower segment 2 when the attachment device 28 is attached to the tower segment 2. Depending on the type of attachment means used, the protective segment may be for instance arranged on one side of a belt, around a central orifice of a ring-shaped attachment device and/or at a contacting area of a flange abutting the tower segment after attachment. The protective segment may comprise for example at least one layer of a soft material. As soft material, for instance neoprene may be used. This protects for instance a coating of the tower segment 2 like a paint layer from damage during the installation and/or the transport of the tower segment 2.

The attachment device 28 may be adaptable to different diameters of the tower segment 2 so that it may be reused in each of a plurality of installation processes. In addition, it is possible to use the same type of attachment device 28 at different positions of a conical tower segment 2.

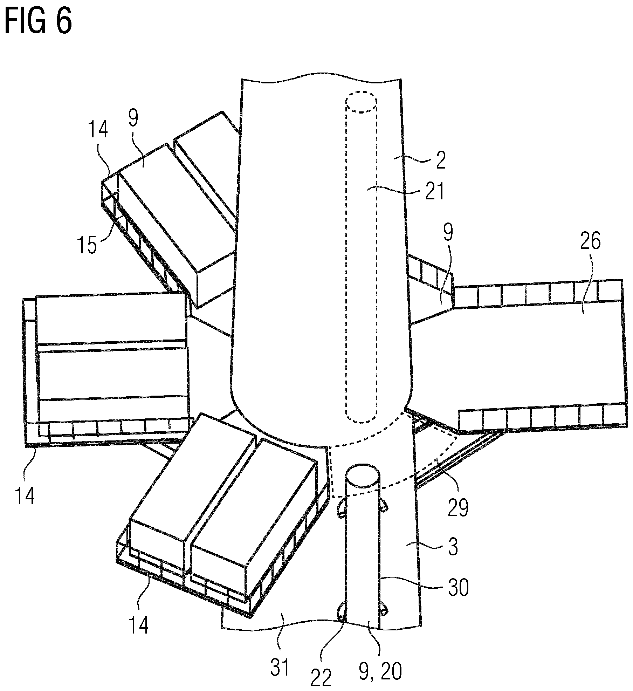

In fig. 6, the components 9 are shown arranged in their respective arrangement positions 15. The movement of the components 9 from the attachment area 13 to the arrangement positions 15 may occur using a crane, for instance the crane 24 arranged on the vessel 11. In addition or alternatively, also other cranes may be used. For instance, a crane comprising a winch attached to the nacelle 4 may be used for lowering the components 9 from the attachment area 13 to the arrangement positions 15 on top of the platforms 14.

In addition or alternatively to the components 9, which are arranged for instance in the container-shaped housing 25, also other types of components may be installed during the installation procedure of the wind turbine 1 using the attachment to the tower segment 2.

As a further example, the component 9 may be a riser tube 20, which is shown in its arrangement position 30 at the outer surface 31 of the at least partially cylindrical tower segment support structure 3. The corresponding attachment area 21 of the riser tube 20 on the tower segment 2 is shown in dashed lines. Also the movement of the riser tube 20 from the attachment area 21 to its arrangement position 30 may occur using a crane as previously described.

The riser tube 20 may comprise one or more electrical cables, gas tubes, communication tables, water inlet pipes or the like for connecting the further components 9 arranged on the platform arrangement 8. The riser tube 20 may be used for example to provide sea water from the sea 10 to the components 9 used in an electrolysis process and/or to conduct gas produced by the components 9 and/or electricity produced by the wind turbine 1 to remote facilities.

In order to facilitate the arrangement of the riser tube 20, a guiding structure 22 attached to the outer circumference of the tower segment support structure 3 and/or to the outer circumference of the tower segment 2 may be used. This allows for guiding the riser tube 20 during the lowering from the attachment area 21 to the arrangement position 30 at the tower segment support structure 3.

Guiding structures may be used correspondingly also with other types of components 9, for instance on components 9 which comprise a container-shaped housing 25 and/or other types of components 9 that are arranged at the wind turbine 1 to be installed by being releasably fixed to the tower segment 2.

It is possible that the platform arrangement 8 comprises a removable platform 23 which may be attached to the tower segment support structure 3 after lowering the riser 20 to its arrangement position. Alternatively, one or more of the platforms 14 comprising the arrangement positions 15 and/or one or more further platforms 26 of the platform arrangement 8 may comprise an orifice and/or a hatch which allows for moving one or more components 9, in particular the riser tube 20, through the platforms 14, 23 when being lowered to the respective arrangement position 30.

Further components 9, which may be installed in the previously described manner, may be for instance components that are related to energy conduction and/or conversion at the wind turbine 1 like a switch gear device, a transformer, a converter and/or electric cable arrangements.

Furthermore, also components usable for medium transport may be attached to the tower segment 2 during installation and afterwards moved to their respective arrangement positions. Such components may include for instance gas pipes, water pipes and/or the riser pipe 20, which comprises one or more gas pipes, water pipes and/or electrical cables.

In addition, also other components which are arranged to the outer circumference of the tower segment support structure 3 may be coupled to the tower segment 2 for being lifted to the tower segment support structure 3 as described in the foregoing. Such components may include for instance ladders, like an access ladder to the interior of the wind turbine 1 or a boat access ladder reaching to the water surface allowing access from a boat or the like, and/or further components, for instance a cathodic protection device like a sacrificial anode. It is also possible that the component 9 is arranged at an arrangement position at a flange between the tower segment 2 and the tower segment support structure 3, for instance when the flange has already been installed with the tower segment support structure 3.

In particular for smaller components 9, it is possible that a magnetic means is used as attachment means 17 for releasably attaching them to the outer surface of the tower segment 2. The magnetic means may comprise for instance an electromagnet so that an automatic release from the outer surface 12 of the tower segment 2 is possible by switching off the magnetic field generated by the magnetic means.

A nacelle component 9 can be a part of the nacelle 4 which is lifted upwards to an arrangement position at the nacelle 4, for instance prior to or after other parts of the nacelle has been mounted on the top side of the tower.

The aforementioned method for arranging the components during the installation of the wind turbine 1 may correspondingly be used on onshore wind turbines as well. In this case, instead of the vessel 11, a land vehicle comprising the crane 24 or a stationary crane 24 can be used.

It is possible that the tower segment 2 only forms a segment of the tower of the wind turbine 1, in particular when the tower consists of two or more segments. In such a case, the components 9 may be attached to one or more of the tower segments 2 as previously described. A tower segmented in more than one tower segment 2 may be used in cases, in which the crane 24 used for arranging the tower segment 2 on the tower segment support structure 3 cannot lift the weight of the entire tower and the at least one component 9.

Although the present invention has been described in detail with reference to the preferred embodiment, the present invention is not limited by the disclosed examples from which the skilled person is able to derive other variations without departing from the scope of the invention.

## Claims

1. Method for the arrangement of at least one component (9) during the installation of a wind turbine (1), wherein the component (9) is releasably attached to a tower segment (2) prior to a coupling of the tower segment (2) to a tower segment support structure (3), wherein the tower segment (2) forms at least a section of a tower of the wind turbine (1) to be installed and wherein the component (9) is attached to an attachment area (13, 21) at the outer surface (12) of the tower segment (2), wherein the component (9) is moved from the attachment area (13) to an arrangement position (15, 30) after coupling of the tower segment (2) to the tower segment support structure (3).

2. Method according to claim 1, **characterized in that** the component (9) is releasably attached to the tower segment (2) by at least one attachment means (17), wherein the attachment means (17) is attached permanently or temporarily to the tower segment.

3. Method according to claim 2, **characterized in that** the attachment means (17) and/or a corresponding attachment portion of the component (9) coupled to the attachment means (17) in the attached state of the component (9) is remotely releasable.

4. Method according to one of the preceding claims, **characterized in that** an attachment structure (27) welded to the tower segment (2) is used as permanently attached attachment means (17) and/or that an attachment device (28), which is releasably coupled to the outer circumference or to a face side of the tower segment (2) and which comprises one or more attachment structures (27), is used as temporarily attached attachment means (17).

5. Method according to claim 4, **characterized in that** a belt arranged around the outer circumference of the tower segment (2), a ring-shaped attachment device (28) arranged around the outer circumference of the tower segment (2), a flange attached to an upper or lower face side of the tower segment (2), and/or a magnetic means is used as attachment device (28).

6. Method according to one of the preceding claims, **characterized in that** an attachment device (28), which is adaptable to different tower segment diameters, is used.

7. Method according to one of the preceding claims, **characterized in that** an attachment device (28) comprising at least one protective segment is used, wherein the protective segment is in direct contact with the tower segment (2) in the coupled state of the attachment device (28) .

8. Method according to claim 7, **characterized in that** the protective segment comprises at least one layer of a soft material.

9. Method according to one of the preceding claims, **characterized in that** a foundation of an offshore wind turbine (1) is used as tower segment support structure (3).

10. Method according to one of the preceding claims, **characterized in that** an arrangement position (15, 30) on a platform arrangement (8) attached to the tower segment support structure (3), in particular to the outer circumference of an at least sectionally cylindrical tower segment support structure (3), an arrangement position (15) at the outer circumference of the tower segment support structure (3), and/or an arrangement position (15) at a flange between the tower segment (2) and the tower segment support structure (3) is used.

11. Method according to claim 10, **characterized in that** a platform arrangement (8) comprising one or more platforms (14, 23) arranged around the outer circumference of the tower segment support structure (3) is used, wherein at least one of the platforms (14, 23) comprises an opening and/or a hatch through which the component is moved to the arrangement position (15, 30).

12. Method according to one of the preceding claims, **characterized in that** the component (9) is moved from the attachment area (13) to the arrangement position (15, 30) using a lifting arrangement, in particular a crane attached to the nacelle (4), a crane arranged on a vessel (11), and/or a crane (24) arranged in the vicinity of the tower segment support structure (3).

13. Method according to claim 12, **characterized in that** at least one guiding means (22) attached to the tower segment (2) and/or to the tower segment support structure (3) is used during the movement of the component (9) to the arrangement position (15, 30).

14. Method according to one of the preceding claims, **characterized in that** the component (9) comprises a container-shaped housing (25) or that the component is arranged inside a container (16).

15. Method according to one of the preceding claims, **characterized in that** the component (9) is a component usable in an electrolysis process, a component usable for energy conduction and/or conversion, a component usable for medium transport, a component to be attached to the outer circumference of the tower segment support structure (3), and/or a nacelle component.
